# EUROPEAN PATENT SPECIFICATION

(11) **EP 1 091 481 B1**
(45) Date of publication and mention of the grant of the patent: **19.03.2008**
(21) Application number: 00119228.5
(22) Date of filing: 06.09.2000
(51) Int. Cl.: F02D 41/08, H02P 9/04

(54) **A generator system**
Generatorsystem
Système de génerateur

(30) Priority: 09.10.1999 GB 9923873
(43) Date of publication of application: 11.04.2001
(73) Proprietor: Bayerische Motoren Werke Aktiengesellschaft, 80809 München (DE)
(72) Inventor: Pawlik, Peter, 83624 Otterfing (DE)

(56) References cited:
- US-A- 4 402 288
- US-A- 4 794 898
- US-A- 5 111 788
- US-A- 5 712 786

## Description

This invention relates to generator systems and in particular, but not exclusively, to a generator system which is suitable for use in a vehicle.

It is known to provide a vehicle with a generator to supply electrical power for loads and/or storage batteries. Electrical consumers can, however, cause such a generator to take up to 4 kW from its prime mover. In the case of an engine, this might cause a load of up to about 30 Nm to be imposed on the crankshaft. Such loads might in turn affect the stability of the idle speed, as torque is varied in an attempt to compensate. Poor idle speed control is a known cause of user dissatisfaction.

For high electrical loads, it is possible to provide to the engine management system (EMS) at least partial information about those loads. The EMS can be provided with tuning maps of at least some of these high loads so that it can ramp up the engine torque as necessary in order to compensate for their effects.

The creation of such maps, however, can take up a lot of development time. The technique would also need to take account of different generator specific characteristics, e.g. differences between generators of different output ratings, generators of different families and, where for example dual-sourcing is employed, between different generator manufacturers.

It is also known to measure load currents and to determine therefrom the load of the generator with its impact on the prime mover. In connection with the above mentioned generator systems it is generally referred to GB 2 248 700 A, GB 2 135 797 A, US 4,887,273A and US 4,682,044.

In US 5111788 a rotational speed control device of an internal combustion engine is disclosed wherein a variation in torque which is a disturbance is detected in order to control the relation between the flow rate of intake air (or the quantity of fuel injected) and the amount of the electric current produced by an alternator, and to reduce the amount of the electric current produced by the alternator only during a period when an increment in the intake air (or the fuel injection) is delayed, thereby stabilizing the engine speed.

In US 4794898 a battery charging system is disclosed. The conduction rate of a switching circuit which controls field current of the generator is detected, while engine speed is also detected. Since the conduction rate represents the actual amount of electricity generated by the generator, the conduction rate as well as engine speed is used to determine optimal engine idle speed.

In US 5712786 an idling speed control method and apparatus is disclosed in which the field current of an alternator is turned on and off to control the power generation rate of the alternator in accordance with the terminal voltage of a battery, and the air intake of an internal combustion engine is increased and decreased to keep the engine speed at a target speed during an idle operation of the engine.

It is object of the present invention to provide an improved generator system where the actual load acting on the prime mover can be determined precisely.

Accordingly, the invention provides a generator system including a generator means arranged in use to be driven by a prime mover and a control means arranged in use to control the output of said prime mover, wherein said control means is arranged in use to derive a mechanical load which is placed on said prime mover by said generator means.

Said mechanical power signal is derived from a consideration of the electrical power developed by said generator and from a factor representative of an efficiency of said generator.

Said electrical power is further derived from an average generator output voltage and from a substantially instantaneous generator output current.

Said substantially instantaneous generator current may be derived from a generator speed signal and from a negative spike value which is indicative of a negative spike in a generator output voltage wave.

Said negative spike value may be derived from a consideration of the average output voltage of said generator means and from a dip in an A.C. component of an output voltage waveform of said generator means.

Said efficiency factor may be derived from a substantially instantaneous generator output current and from a generator speed measurement.

Said generator speed measurement may be derived from a synchronisation pulse from said control means and from a phase impulse signal which is representative of a substantially instantaneous phase relationship of said generator means.

The system may further comprise a digital interface which is arranged in use to facilitate the passage of information between said generator means and said control means.

Said information may include one or more of a synchronisation pulse from said control means, a generator output signal representative of a substantially instantaneous output current of said generator means and a mechanical power signal which is indicative of the mechanical power taken from said prime mover by said generator means.

The system may further comprise a data processing means which is integrated with said generator means and arranged to derive said mechanical power signal.

Said mechanical load may comprise a torque load on a shaft means of said prime mover.

The derivation of said mechanical load may further include a consideration of an efficiency of a drive means which provides drive from said prime mover to said generator means.

Said control means may be arranged in use to selectively make one or more changes to a power output of said prime mover so as to provide compensation for said mechanical load. A said change may comprise part of a prime mover idle speed control method or part of a load balancing strategy.

The generator system may comprise a generator system of a vehicle.

The invention will now be described by way of example only and with reference to the accompanying drawings, in which:

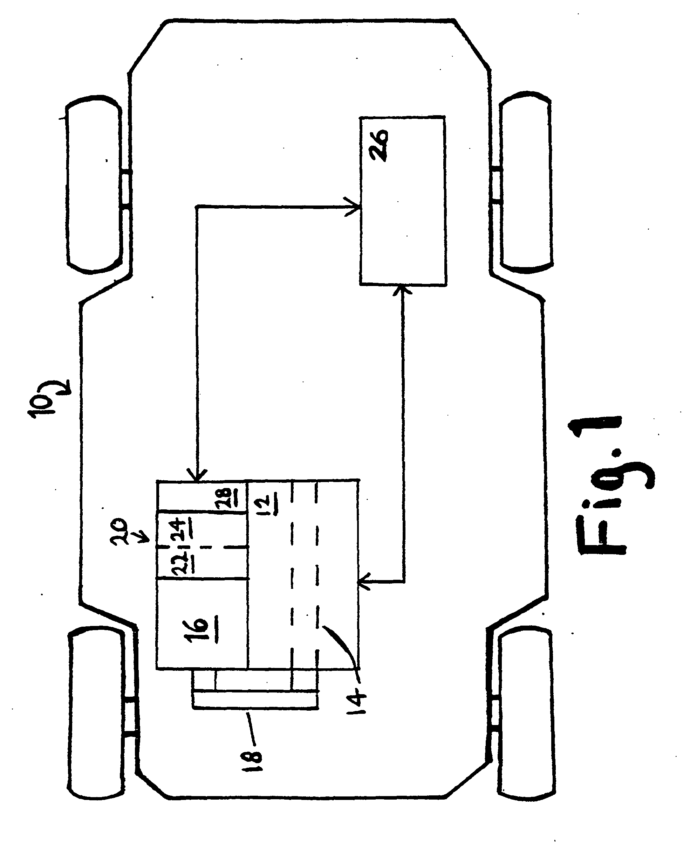

Figure 1 is a schematic diagram of a vehicle including a generator system according to the invention;
Figure 2 is a flow diagram of a method of analysis used by part of the generator system of Figure 1;
Figure 3 represents a trace of an output voltage waveform produced by the generator system of Figure 1; and
Figure 4 is a graph relating a portion of the waveform of Figure 3 to an operating speed of a generator of the system of Figure 1 so as to derive the substantially instantaneous generator output current.

Referring to the figures, a vehicle 10 includes a prime mover in the form of a combustion engine 12. The engine 12 is an internal combustion engine and includes a crankshaft 14 which is arranged to drive a generator 16 by means of a drive belt 18. The generator 16 is in the form of a three-phase alternator and includes a regulator-rectifier 20. The regulator-rectifier 20 controls the charging of a storage battery (not shown) and also includes a measurement unit 22 and a data processing unit 24.

The measurement unit 22 is arranged to provide to the data processing unit 24 a signal representative of the substantially instantaneous phase relationship of the three phases ("Phase Impulse"). It 22 also provides a signal which is representative of the generator output voltage ("Generator Output").

The generator output signal includes two parts. One part is a D.C. component, which is representative of the average generator output voltage. The other component is an A.C. component, which is representative of the real time rectified generator output voltage.

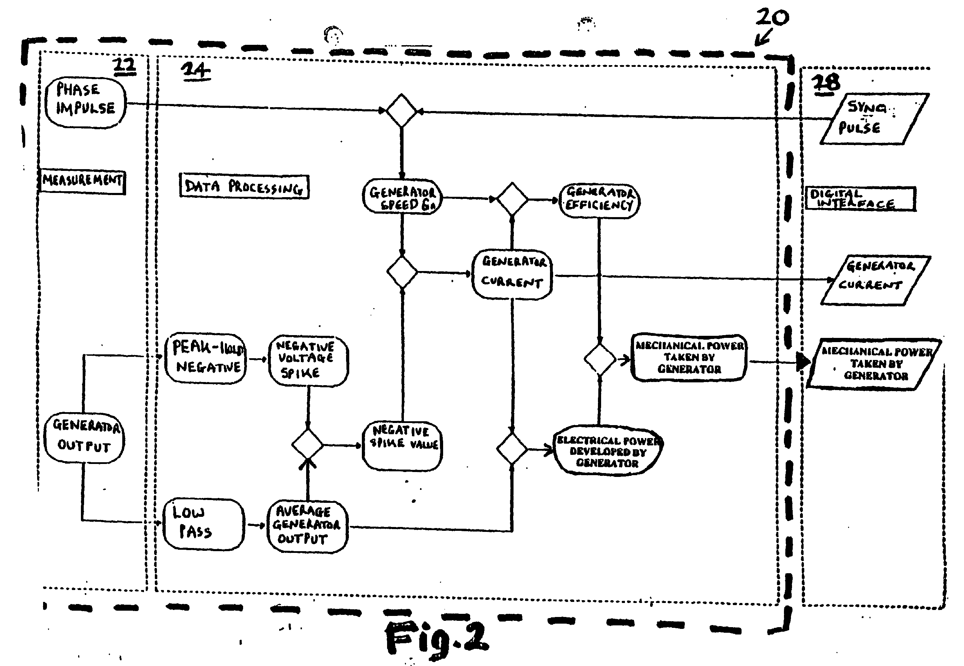

The data processing unit 24 includes an application specific integrated circuit (ASIC) and receives further information in the form of an input of a synchronisation pulse ("Sync Pulse") from an engine management system (EMS) 26. The ASIC processes these inputs "Phase Impulse", "Generator Output", "Sync Pulse" in accordance in particular with the flow diagram of Figure 2 and provides to the EMS 26 two signals. One of these signals is indicative of the generator output current and the other signal is indicative of the mechanical power taken from the engine 12 by the generator 16, e.g. at its drive pulley (not shown separately).

The information on "Sync Pulse", "Generator Current", and "mechanical power taken by the generator" is passed between the data processing unit 24 and the EMS 26 by means of a digital interface 28.

The derivation of the generator current and of the mechanical power taken by the generator 16 will now be described in more detail.

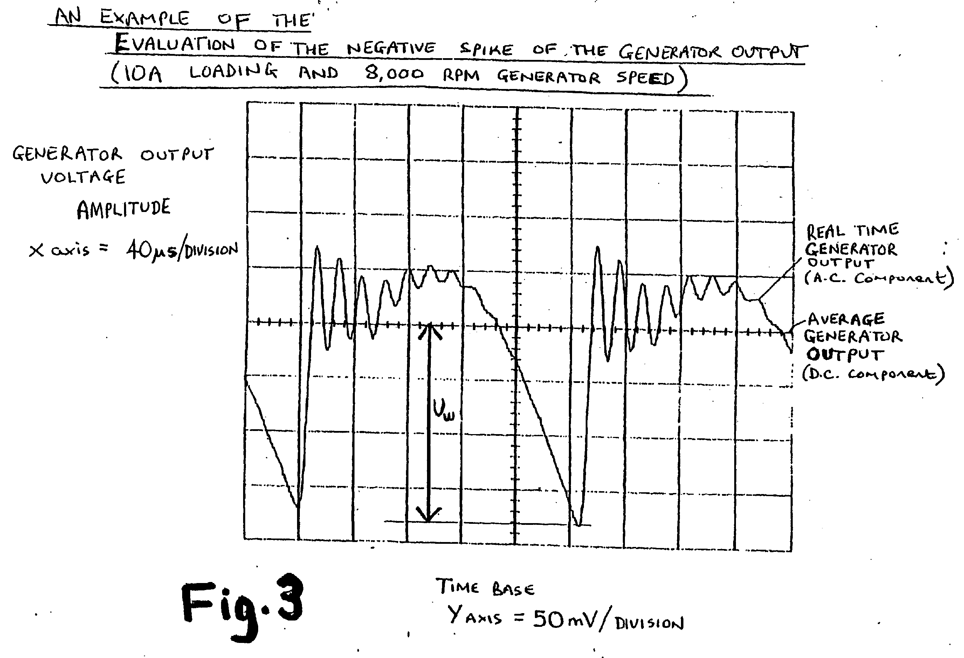

In Figure 3, the complex waveform of the real-time fully-rectified generator output voltage can be seen plotted along with the average generator voltage.

The average generator output voltage (D.C. component) is fed into the data-processing unit 24 through a low pass filter. The A.C. component is fed into the data processing unit 24 through a "peak hold negative circuit".

When an electrical load is initially placed on the generator 16, its real time output voltage (A.C. component) dips and the negative voltage spike is captured and held in the "peak hold negative" circuit. The negative spike is assigned a value Uw which represents the difference between the level of the negative spike captured in the peak hold circuit and the average generator output voltage (D.C. component). In the example in Figure 3, the negative spike value Uw is 180 mV.

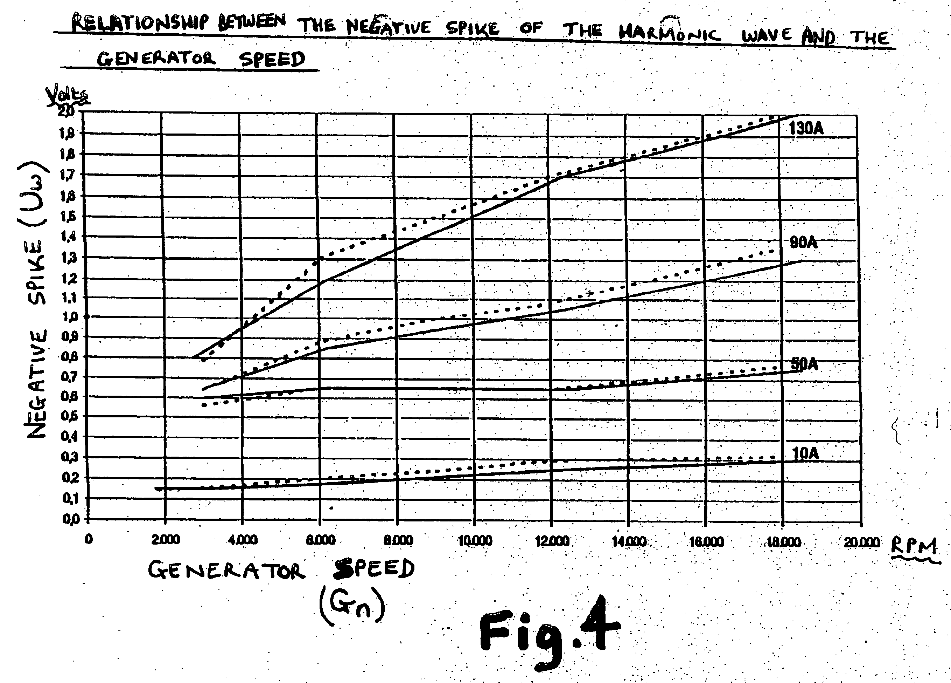

The ASIC compares the negative spike value Uw with the generator speed Gn, which is itself obtained by combining the timing information from generator pole pairs (not shown separately, but represented by the "phase impulse" signal) and the synchronisation signal "sync pulse" provided to the ASIC from the EMS 26 via the digital interface 28. The substantially instant generator current can then be obtained from a single memory map, as represented in Figure 4.

Once the average generator output voltage and the substantially instantaneous generator current are known, the ASIC calculates the substantially instantaneous electrical power developed by the generator 16.

The ASIC also derives a measure of the generator efficiency from a consideration of the measured generator speed Gn and the generator current. The generator efficiency is combined with the electrical power developed by the generator 16 (e.g. in kW) to produce the signal representative of the mechanical power taken by the generator (e.g. also in kW).

The EMS 26 is arranged to derive the substantially instantaneous mechanical load which is placed on the crankshaft 14 by the generator 16. This crankshaft mechanical load (e.g. in Nm) is derived by the EMS 26 from the mechanical power taken by the generator 16 at its pulley (pulley power).

To derive the mechanical power taken by the generator 16 from the crankshaft 14, the EMS 26 obtains a signal which is representative of the substantially instantaneous engine speed and divides the pulley power by this engine speed signal. The EMS 26 also includes a factor to take account of the efficiency of the belt drive 18.

The EMS 26 is arranged to convert the pulley power into a torque value. The EMS 26 then alters the power output (e.g. a torque strategy) of the engine 12, as necessary, to compensate for this torque value. Changes made to the power output of the engine 12 in this manner might form, for example, part of an engine idle speed control strategy or part of a load balancing strategy.

Because the EMS 26 is provided via the digital interface 28 with a signal which is representative of the mechanical power taken by the generator 16, the EMS 26 needs to be provided with only one map in order to change the power output of the engine 12 so as to compensate for the load placed on the crankshaft 14 by the generator 16. This enables the EMS 26 to compensate for generator loading of the crankshaft 14 and thereby to reduce the likelihood of perceivable slumps in engine speed. This is particularly beneficial at idle speeds where, using this invention, even quite low electrical loads can be taken account of in the engine torque strategy.

Because the EMS 26 is provided with a signal representing the mechanical power taken by the generator 16, the EMS 26 does not need to take account of the specific characteristics peculiar to the particular generrator 16 which is installed or parameters which are dependent on its installation (e.g. drive-belt to generator-pulley ratio). This means that different generators can be used with a common EMS 26. It can thus be seen that one benefit of the invention is simpler engine tuning than would be possible if a different torque model had to be used for each generator or installation.

## Claims

1. A generator system including a generator means (16) arranged in use to be driven by a prime mover (12) and a control means (26) arranged in use to control the output of said prime mover (12), wherein said control means (26) is arranged in use to derive a mechanical load which is placed on said prime mover (12) by said generator means (16), wherein said mechanical load is derived at least in part from a mechanical power signal which is indicative of the mechanical power taken from said prime mover (12) by said generator means (16),
**characterised in that**
said mechanical power signal is derived from a consideration of the electrical power developed by said generator (16) and from a factor representative of an efficiency of said generator (16) and said electrical power is derived from an average generator output voltage and from a substantially instantaneous generator output current.

2. A system according to Claim 1, wherein said substantially instantaneous generator current is derived from a generator speed signal and from a negative spike value which is indicative of a negative spike in a generator output voltage wave.

3. A system according to Claim 2, wherein said negative spike value is derived from a consideration of the average output voltage of said generator means and from a dip in an A.C. component of an output voltage waveform of said generator means.

4. A system according to any one of Claims 1 to 3, wherein said efficiency factor is derived from a substantially instantaneous generator output current and from a generator speed measurement.

5. A system according Claim 4 wherein said generator speed measurement is derived from a synchronisation pulse from said control means and from a phase impulse signal which is representative of a substantially instantaneous phase relationship of said generator means.

6. A system according to any preceding claim, further comprising a digital interface which is arranged in use to facilitate the passage of information between said generator means and said control means.

7. A system according to Claim 6, wherein said information includes one or more of a synchronisation pulse from said control means, a generator output signal representative of a substantially instantaneous output current of said generator means and a mechanical power signal which is indicative of the mechanical power taken from said prime mover by said generator means.

8. A system according to any preceding claim, further comprising a data processing means which is integrated with said generator means and arranged to derive said mechanical power signal

9. A system according to any preceding claim, wherein said mechanical load comprises a torque load on a shaft means of said prime mover.

10. A system according any preceding claim, wherein the derivation of said mechanical load further includes a consideration of an efficiency of a drive means which provides drive from said prime mover to said generator means.

11. A system according to any preceding claim, wherein said control means is arranged in use to selectively make one or more changes to a power output of said prime mover so as to provide compensation for said mechanical load.

12. A system according to Claim 11 wherein a said change comprises part of a prime mover idle speed control method or part of a load balancing strategy.

## Patentansprüche

1. Generatorsystem, das folgendes enthält: ein Generatormittel (16), das ausgelegt ist, von einem Primärantrieb (12) angetrieben zu werden, und ein Steuermittel (26), das ausgelegt ist, bei Verwendung die Ausgabe des Primärantriebs (12) zu steuern, wobei das Steuermittel (26) ausgelegt ist, bei Verwendung eine mechanische Last abzuleiten, die dem Hauptantrieb (12) von dem Generatormittel (16) auferlegt wird, wobei die mechanische Last zumindest teilweise aus einem Signal für mechanische Leistung abgeleitet ist, das die durch das Generatormittel (16) von dem Primärantrieb (12) abgenommene mechanische Leistung anzeigt, **dadurch gekennzeichnet, daß** das Signal für mechanische Leistung unter Berücksichtigung der durch den Generator (16) entwickelten elektrischen Leistung und aus einem Faktor, der eine Effizienz des Generators (16) darstellt, abgeleitet wird und die elektrische Leistung aus einer mittleren GeneratorausgangsSpannung und aus einem im wesentlichen momentanen Geheratorausgangsstrom abgeleitet ist.

2. System nach Anspruch 1, wobei der im wesentlichen momentane Generatorstrom aus einem Generatordrehzahlsignal und aus einem negativen Spitzenwert, der eine negative Spitze in einer Generatorausgangsspannungswelle anzeigt, abgeleitet ist.

3. System nach Anspruch 2, wobei der negative Spitzenwert unter Berücksichtigung der mittleren Ausgangsspannung des Generatormittels und aus einem Abfall bei einer AC-Komponente einer Ausgangsspannungswellenform des Generatormittels abgeleitet wird.

4. System nach einem der Ansprüche 1 bis 3, wobei der Effizienzfaktor aus einem im wesentlichen momentanen Generatorausgangsstrom und aus einer Generatordrehzahlmessung abgeleitet wird.

5. System nach Anspruch 4, wobei die Generatordrehzählmessung aus einem Synchronisationsimpuls von dem Steuermittel und aus einem Phasenimpulssignal, das eine im wesentlichen momentane Phasenbeziehung des Generatormittels darstellt, abgeleitet wird.

6. System nach einem der vorhergehenden Ansprüche, weiterhin umfassend eine digitale Schnittstelle, die ausgelegt ist, bei Verwendung die Weiterleitung von Informationen zwischen dem Generatormittel und dem Steuermittel zu erleichtern.

7. System nach Anspruch 6, wobei die Informationen eines oder mehrere der folgenden enthalten: einen Synchronisationsimpuls von dem Steuermittel, ein Geheratorausgangssignal, das einen im wesentlichen momentanen Ausgangsstrom des Generatormittels darstellt, oder ein Signal für mechanische Leistung, das die durch das Generatormittel von dem Primärantrieb abgenommene mechanische Leistung anzeigt.

8. System nach einem der vorhergehenden Ansprüche, weiterhin umfassend ein Datenverarbeitungsmittel, das mit dem Generatormittel integriert ist und ausgelegt ist, das Signal für mechanische Leistung abzuleiten.

9. System nach einem der vorhergehenden Ansprüche, wobei die mechanische Last eine Drehmomentlast an einem Wellenmittel des Primärantriebs umfaßt.

10. System nach einem der vorhergehenden Ansprüche, wobei die Ableitung der mechanischen Last weiterhin eine Berücksichtigung einer Effizienz eines Antriebsmittels beinhaltet, das einen Antrieb von dem Primärantrieb zu dem Generatormittel bereitstellt.

11. System nach einem der vorhergehenden Ansprüche, wobei, das Steuermittel ausgelegt ist, bei Verwendung selektiv eine oder mehrere Änderungen, an einer Leistungsabgabe des Primärantriebs vorzunehmen, um eine Kompensation für die mechanische Last bereitzustellen.

12. System nach Anspruch 11, wobei die Änderung Teil eines Primärantriebsleerlaufdrehzahlsteuer-Verfahrens oder Teil einer Lastausbalancierungsstrategie umfaßt.

## Revendications

1. Système de générateur comprenant un générateur (16) entraîné par un moteur primaire (12) et un moyen de commande (26) pour commander la sortie du moteur primaire (12), dans lequel le moyen de commande (26) dérive une charge mécanique qui est placée sur le moteur primaire (12) par le générateur (16), la charge mécanique étant dérivée au moins en partie d'un signal qui indiqué la puissance mécanique extraite du moteur primaire (12) par le générateur (16),
**caractérisé en ce que**
le signal de puissance mécanique est dérivé d'une considération de la puissance électrique développée par le générateur (16) et d'un coefficient représentatif d'une efficacité du générateur (16), et
la puissance électrique est dérivée d'une tension de sortie de générateur moyenne et d'un courant de sortie de générateur sensiblement instantané.

2. Système selon la revendication 1,
dans lequel
le courant du générateur sensiblement instantané est dérivé d'un signal de vitesse du générateur et d'une valeur de négative indicative d'une pointe négative dans une onde de tension de sortie de générateur.

3. Système selon la revendication 2,
dans lequel
la valeur de pointe négative est dérivée d'une considération de la tension de sortie moyenne du générateur et d'une inclinaison d'une composante de courant alternatif d'une forme d'onde de tension de sortie du générateur.

4. Système selon l'une des revendications 1 à 3,
dans lequel
le coefficient d'efficacité est dérivé d'un courant de sortie de générateur sensiblement instantané et d'une mesure de vitesse du générateur.

5. Système selon la revendication 4,
dans lequel
la mesure de vitesse du générateur est dérivée d'une impulsion de synchronisation provenant du moyen de commande et d'un signal d'impulsion de phase représentatif d'une relation de phase sensiblement instantanée du générateur.

6. Système selon l'une des revendications précédentes,
comprenant en outre une interface numérique pour faciliter le passage d'informations entre le générateur et le commande.

7. Système selon la revendication 6,
dans lequel
les informations comprennent une ou plusieurs impulsion(s) de synchronisation provenant du moyen de commande, un signal de sortie du générateur représentatif d'un courant de sortie sensiblement instantané du générateur et un signal indicatif de la puissance mécanique extraite du,moteur primaire par le générateur.

8. Système selon l'une des revendications précédentes,
comprenant en outre un moyen de traitement de données intégré au générateur et agencé pour dériver le signal de puissance mécanique.

9. Système selon l'une des revendications précédentes,
dans lequel
la charge mécanique comprend une force de torsion sur un arbre du moteur primaire.

10. Système selon l'une des revendications précédentes,
dans lequel
la dérivation de la charge mécanique comprend en outre la considération de l'efficacité d'un moyen qui fournit l'entraînement du moteur primaire au générateur.

11. Système selon l'une des revendications précédentes,
dans lequel
le moyen de commande effectue de manière sélective un ou plusieurs changement(s) sur une sortie de puissance du moteur primaire de manière à obtenir une compensation de la charge mécanique.

12. Système selon la revendication 11,
dans lequel
un tel changement comprend une partie d'un procédé de commande de ralenti de moteur primaire ou une partie d'une stratégie d'équilibrage de la charge.
